# EUROPÄISCHE PATENTSCHRIFT

(11) **EP 4 091 800 B1**
(45) Veröffentlichungstag und Bekanntmachung des Hinweises auf die Patenterteilung: **20.11.2024**
(21) Anmeldenummer: 21175399.1
(22) Anmeldetag: 21.05.2021
(51) Int. Cl.: B29C 65/08, B65B 7/02, B65B 51/22, B65B 55/24, B65B 61/26

(54) **VORRICHTUNG ZUM BEFÜLLEN FLEXIBLER BEHÄLTNISSE**
DEVICE FOR FILLING FLEXIBLE CONTAINERS
DISPOSITIF DE REMPLISSAGE DES RÉCIPIENTS FLEXIBLES

(43) Veröffentlichungstag der Anmeldung: 23.11.2022
(73) Patentinhaber: GREIF-VELOX Maschinenfabrik GmbH, 23560 Lübeck (DE)
(72) Erfinder: Hoffmann, Stefan, Lübeck (DE); Tillack, Bernd, Grevesmühlen (DE); Mildner, Dr. Alexander, 23560 Lübeck (DE)
(74) Vertreter: Patentanwälte Hemmer Lindfeld Frese Partnerschaft mbB

(56) Entgegenhaltungen:
- WO-A1-2011/099297
- WO-A2-2011/080514
- DE-C1- 19 804 736
- IT-A1- 201700 009 680
- JP-A- 2014 000 982
- JP-A- 2015 062 634
- JP-A- H1 149 106

## Beschreibung

Die Erfindung betrifft eine Vorrichtung zum Befüllen flexibler Behältnisse, insbesondere eine Ventilsackabfüllvorrichtung mit den im Oberbegriff des Anspruchs 1 angegebenen Merkmalen.

Abfüllvorrichtungen zum Befüllen flexibler Behältnisse, insbesondere von Ventilsäcken, mit pulverigem Füllgut sind aus dem Stand der Technik bekannt. Der Vorgang des Abfüllens derartiger Ventilsäcke kann durch eine Druckförderung des Füllgutes in den Ventilsack hinein erfolgen. Alternativ oder zusätzlich kann eine Vakuumbefüllung erfolgen, wobei der entsprechende Vorgang innerhalb einer Vakuumkammer erfolgt, in der ein atmosphärischer Unterdruck erzeugt wird, durch den das Füllgut in den Ventilsack gesaugt wird. Der Ventilsack wird nach dem Befüllen im Bereich eines Ventils durch Verschweißen, Falten oder ähnliches verschlossen, um das Füllgut vollständig zu umschließen und dadurch vor äußeren Einflüssen zu schützen. An-schließend wird der Ventilsack einer weiteren Verarbeitung oder einem Transport zugeführt.

Solche Abfüllvorrichtungen zählen zum Stand der Technik und werden beispielsweise von der Greif-Velox Maschinenfabrik GmbH in Lübeck hergestellt und weltweit vertrieben. Zum Stand der Technik zählen Vakuumpacker, Luftpacker, Turbinenpacker und andere, die dazu dienen, ein pulveriges oder körniges Produkt in einem Behältnis abzupacken und dieses Behältnis nachfolgend zu verschließen. Derartige Vorrichtungen weisen daher ein Maschinengestell auf, in dem typischerweise neben einer Befülleinrichtung auch eine Verschließeinrichtung vorgesehen ist, mit welcher das befüllte Behältnis verschließbar ist. Üblicherweise weisen die Verschließeinrichtungen eine Ultraschallschweißvorrichtung auf, welche eine Sonotrode und einen Amboss umfasst, die einen vorgesehenen Abschnitt des betreffenden Behältnisses einschließen und verschweißen. In einigen Anwendungsfällen werden die befüllten und verschlossenen Behältnisse auf die Einhaltung von Qualitätskriterien hin überprüft. Falls eine Abweichung von einem Qualitätskriterium erkannt wird, werden die entsprechenden Behältnisse aus der weiteren Verarbeitung oder dem Transport ausgeschleust. Sollte das Qualitätskriterium aufgrund einer Verschlusseinrichtung nicht eingehalten worden sein, ist diese zu reparieren oder zu justieren. Bei einer Mehrstutzenanlage, mit der mehrere Behältnisse gleichzeitig parallel befüllt werden, ist die Zuordnung eines fehlerhaft verschlossenen Behältnisses und der dies verursachenden Verschließeinrichtung jedoch schwierig.

Aus JP H1 1-49106 A ist eine Abfüllvorrichtung bekannt, bei welcher in parallelen Fülllinien zunächst aus einem Folienband ein Schlauch gebildet, befüllt und nachfolgend durch Ultraschallschweißen in geschlossene Abschnitte unterteilt wird. Die damit erzeugten geschlossenen Schlauchabschnitte sind gleich groß und weisen gleiche Schweißnähte auf.

Aus JP 2014 000982 A zählt es zum Stand der Technik, beim thermischen Verschweißen von kunststoffbeschichteten Schlauchverpackungen für Flüssigkeiten in den das Behältnis abschließenden Quernähten Kennzeichnungen durch Einprägungen vorzusehen, welche eine Zuordnung der Schweißwerkzeuge ermöglichen.

Aus WO 2011/080514 A2 zählt es zum Stand der Technik, bei der Lebensmittelverpackung mittels Folien die Heizplatten zu kennzeichnen, um später nachverfolgen zu können, welche Verpackung mit welcher Heizplatte versiegelt worden ist.

Aus DE 198 04 736 C1 zählt es zum Stand der Technik, Schweißbalken, die zum Verschweißen von Folienschläuchen oder doppellagigen Foliebahnen dienen in einem Drehgestellt anzuordnen und mit einem entsprechenden Prägestempel zu versehen, um nachvollziehen zu können, welche Schweißnaht von welchem Schweißbalken erzeugt worden ist.

Eine vergleichbare Anordnung zum Schweißen von Windeln ist aus WO 2011/099297 A1 bekannt.

Aus IT 2017 0000 9680 A1 ist eine ähnliche Schweißvorrichtung zum Schweißen kontinuierlich zugeführter Bänder von absorbierenden Hygieneartikeln bekannt.

JP 2014 000982 A zeigt die Induktionsschweißung zur Herstellung von Papierbehältern aus bahnförmigem Verpackungsmaterial zum Abfüllen von flüssigen Lebensmitteln. Zur Erzielung einer hohen Durchlaufgeschwindigkeit wird auch hier mit mehreren Schweißbalkenpaaren gearbeitet, die jeweils ein anderes Muster erzeugen, um feststellen zu können, welche Schweißung mit welchem Schweißbalkenpaar gefertigt worden ist.

Vor diesem Hintergrund liegt der Erfindung die Aufgabe zugrunde, eine Vorrichtung zum Befüllen flexibler Behältnisse, insbesondere eine Ventilsackabfüllvorrichtung, zu verbessern und zu ermöglichen einzelne, verschlossene Behälter einzelnen Verschließeinrichtungen zuordnen zu können.

Diese Aufgabe wird gemäß der Erfindung durch eine Vorrichtung mit den in Anspruch 1 angegebenen Merkmalen erreicht. Vorteilhafte Ausgestaltungen der Erfindung sind in den Unteransprüchen, der nachfolgenden Beschreibung und den Zeichnungen angegeben.

Die erfindungsgemäße Vorrichtung zum Befüllen flexibler Behältnisse weist ein Maschinengestell auf, in dem mehrere Befülleinrichtungen und mehrere den jeweiligen Befülleinrichtungen zugeordnete Verschließeinrichtungen, mit denen befüllte Behältnisse verschließbar sind, angeordnet sind, wobei die Verschließeinrichtungen jeweils eine Ultraschallschweißvorrichtung aufweisen, mit einem Amboss zur Auflage eines Abschnitts des betreffenden Behältnisses, insbesondere eines Füllventils eines Ventilsacks, und mit einer Sonotrode, wobei der Amboss und die Sonotrode zueinander bewegbar angeordnet sind. Dabei ist vorgesehen, dass die Ambosse der einzelnen Verschließeinrichtungen unterschiedliche Werkzeugkonturen aufweisen, sodass sie beim Ultraschallschweißen voneinander unterscheidbare Schweißmuster in den betreffenden Behältnissen erzeugen.

Die Vorrichtung ist folglich dazu vorgesehen, mehrere flexible Behältnisse, beispielsweise Säcke, Beutel oder Netze, parallel zu befüllen und unmittelbar nach dem Befüllen zu verschließen. Besonders vorteilhaft ist die Vorrichtung eine Abfüllvorrichtung für Ventilsäcke, also eine sogenannte Sackabfüllmaschine für Ventilsäcke, bei der große Mengen pulverigen oder körnigen Füllguts in hoher Geschwindigkeit in Säcke abgefüllt werden. Derartige Säcke sind beispielsweise aus Papier oder papierähnlichem Material aufgebaut und weisen typischerweise eine Kunststoffbeschichtung an der Innenseite auf, zumindest im Bereich des Ventils, um den Sack nach dem Befüllen dicht verschweißen zu können.

Dabei ist vorzugsweise jeder Befülleinrichtung eine Verschließeinrichtung zugeordnet. Die Befülleinrichtung füllt das Füllgut in das betreffende Behältnis ein. Anschließend wird das Behältnis mittels der Verschließeinrichtung dichtend verschlossen. Hierzu sind die Sonotrode und der Amboss der betreffenden Verschließeinrichtung relativ zueinander bewegbar, sodass sie sich aufeinander zu oder voneinander weg bewegen können. Es kann ausreichen, lediglich eine dieser beiden Komponenten bewegbar zu gestalten, während die andere der beiden Komponenten feststeht. Zum Verschließen des Behältnisses wird ein Abschnitt des Behältnisses, beispielsweise das Füllventil, zwischen der Sonotrode und dem Amboss eingeschlossen und beidseitig in Anlage gebracht. Die Sonotrode wird in Betrieb gesetzt und wirkt auf das Material des Behältnisses ein, wobei der Amboss dabei als Gegenlager dient. Durch die mittels der Sonotrode eingebrachte Energie arbeitet sich die Werkzeugkontur des Ambosses während des Ultraschallschweißens in das Material des flexiblen Behältnisses hinein und führt dadurch, je nach Ausführung der Sonotrode und/oder der Werkzeugkontur, zu einem bestimmten Schweißmuster an dem verschlossenen Behältnis.

Ein Grundgedanke der erfindungsgemäßen Vorrichtung liegt darin, die einzelnen Verschließeinrichtungen so anzupassen, dass die durch sie erzeugten Schweißmuster voneinander unterscheidbar sind. Hierzu sind die einzelnen Werkzeugkonturen der Ambosse untereinander unterschiedlich gestaltet. Dabei können die Unterschiede in den Gestaltungen der Werkzeugkonturen eine große Bandbreite haben. Die Werkzeugkonturen könnten sich daher marginal bis deutlich voneinander unterscheiden.

In einer vorteilhaften Ausführungsform weisen die Ambosse jeweils eine identische Basiskontur auf, wobei die Basiskontur mindestens eines der Ambosse von mindestens einem für den betreffenden Amboss individuellen Markierungsmerkmal durchsetzt ist. Die Werkzeugkonturen der einzelnen Ambosse ähneln daher einander und unterscheiden sich lediglich in den individuellen Markierungsmerkmalen. Ein Markierungsmerkmal ist dabei ein Formmerkmal, das in die Form der Basiskontur einwirkt oder damit verschmilzt, beispielsweise als eine individuelle Erhebung oder eine Vertiefung. Die Basiskontur kann bevorzugt dazu ausgebildet sein, mit der auf sie einwirkenden Sonotrode einen dichtenden Verschluss des Behältnisses herzustellen. Dies kann sich in Schweißlinien, Schweißflächen, Waffelmustern oder ähnlichem äußern. Sämtliche Ambosse können folglich zur Bereitstellung der identischen Basiskonturen bevorzugt identisch zueinander hergestellt werden. Zusätzlich ist bei allen oder einer Teilmenge der Ambosse jeweils ein individuelles Markierungsmerkmal in die Werkzeugkontur eingebracht. Durch dieses individuelle Markierungsmerkmal unterscheiden sich die Werkzeugkonturen der Ambosse voneinander, sodass sich folglich auch die damit hergestellten Schweißmuster voneinander unterscheiden lassen. Die Basiskontur kann insbesondere eine oder mehrere Erhebungen aufweisen, wobei das Markierungsmerkmal als bereichsweise Entfernung oder Ergänzung einer der Erhebungen realisiert sein könnte. Es ist vorstellbar, dass alle Ambosse bis auf einen Amboss ein Markierungsmerkmal aufweisen.

Die Basiskontur könnte mindestens zwei parallel zueinander angeordnete Erhebungen aufweisen, wobei das Markierungsmerkmal durch zumindest eine der Erhebungen verläuft. Die Erhebungen können ein Schweißmuster erzeugen, das im Wesentlichen aus parallelen Schweißlinien besteht. Das Markierungsmerkmal führt dazu, dass im entstandenen Schweißmuster zumindest eine der Schweißlinien von einer Markierung durchzogen ist. Diese Markierung ist optisch besonders dann eindeutig zu erkennen, wenn das zugrundeliegende Markierungsmerkmal zumindest weitgehend quer zu der betreffenden Erhebung ausgerichtet ist und eine Erstreckung aufweist, die deutlich die Stärke der Erhebung übersteigt. Auf der anderen Seite ist durch eine durchgehende Schweißlinie stets ein dichter Verschluss des Behältnisses sichergestellt.

Die Markierungsmerkmale können an unterschiedlichen Stellen der jeweiligen Basiskonturen angeordnet sein. Die Basiskonturen könnten beispielsweise jeweils eine Haupterstreckungsrichtung aufweisen. Die einzelnen Markierungsmerkmale können an unterschiedlichen Positionen entlang dieser Haupterstreckungsrichtung angeordnet sein. Durch die entsprechende Auswahl der unterschiedlichen Stellen können die Markierungen in den Schweißmustern sehr einfach den Verschließeinrichtungen zugeordnet werden. Es ist auch denkbar, mehrere Markierungsmerkmale für jeden Amboss vorzusehen, wobei die Verteilung der Markierungselemente für die jeweilige Verschließeinrichtung kennzeichnend ist.

Es ist vorteilhaft, wenn die Markierungsmerkmale untereinander weitgehend identisch sind. Die Markierungsmerkmale können beispielsweise durch dasselbe Werkzeug hergestellt werden, das die jeweilige Basiskontur bearbeitet. Es ist nicht notwendig, aufwändige, geometrische Figuren an der Basiskontur zu realisieren, sondern es können auch eine einzelne, einfache, geradlinige Vertiefungen, Auskerbungen oder Ausfräsungen ausreichen.

Grundsätzlich können die sich unterscheidenden Konturen auch an der Basiskontur selbst vorgesehen sein, sei es durch Unterbrechungen, Profilierungen oder dergleichen. So kann ein Werkzeugkonturabschnitt durch einen wellenförmigen Verlauf gebildet sein, wobei zur Unterscheidung unterschiedliche Wellenlängen oder Wellenhöhen Verwendung finden, auch kann ein durchgehender linienförmiger Werkzeugkonturabschnitt gebildet sein, der dazu im Wesentlichen senkrechte Markierungsabschnitte aufweist, deren Abstand und/oder deren Höhe die Markierungsmerkmale bilden.

Die Ambosse können jeweils einen ersten Werkzeugkonturabschnitt und einen zweiten Werkzeugkonturabschnitt aufweisen, wobei der erste Werkzeugkonturabschnitt dazu ausgebildet ist, einen dichtenden Verschluss des betreffenden Behältnisses auszuformen, und wobei der zweite Werkzeugkonturabschnitt dazu ausgebildet ist, ein davon unabhängiges Erkennungsmuster auszuformen. Der erste Werkzeugkonturabschnitt könnte folglich weitgehend der vorangehend genannten Basiskontur entsprechen, deren Aufgabe das Bereitstellen des dichtenden Verschlusses ist. Durch einen separaten zweiten Werkzeugkonturabschnitt wird ein zusätzliches, außerhalb des dichtenden Verschlusses liegendes, der Information dienendes Muster eingefügt. Dies könnte neben unterschiedlichen geometrischen Figuren auch Buchstaben, Ziffern, Striche, Barcodes, andere Codierungsmuster oder Zeichen umfassen. Der erste Werkzeugkonturabschnitt und der zweite Werkzeugkonturabschnitt können voneinander völlig unabhängig sein und der Erfüllung unterschiedlicher Aufgaben, nämlich des Verschließens und des Informierens, erfüllen.

Es ist dabei vorteilhaft, wenn der erste Werkzeugkonturabschnitt und der zweite Werkzeugkonturabschnitt voneinander beabstandet sind. Der Abstand sollte dabei so bemessen sein, dass der erste Werkzeugkonturabschnitt von der Einwirkung des zweiten Werkzeugkonturabschnitts beim Verschweißen nicht beeinflusst wird.

Vorteilhaft sind die Markierungsmerkmale so ausgebildet, dass diese maschinenlesbar sind, z.B. als eine Art Barcode, damit eine digitale Erfassung im Produktionsablauf möglich ist.

Der Amboss kann vorteilhaft zum Reinigen der zu verschweißenden Stelle des Behältnisses Luftdüsen aufweisen, die in der Werkzeugkontur integriert sind oder daran angrenzen, wobei die Luftdüsen mit einer Quelle für druckbeaufschlage Luft verbindbar sind. Durch die Luftdüsen können unmittelbar vor dem Verschweißen Fremdkörper aus dem betreffenden Abschnitt des Behältnisses ausgeblasen werden, sodass die Qualität der Verschweißung optimiert wird.

Die Erfindung ist nachfolgend anhand von in den Zeichnungen dargestellten Ausführungsbeispiels näher erläutert. Es zeigen:
- Fig. 1: in schematischer Darstellung eine Vorrichtung zum Befüllen flexibler Behältnisse,
- Fig. 2: in schematischer Darstellung eine vereinfachte Seitenansicht einer Ultraschallschweißvorrichtung,
- Fig. 3: in schematischer Darstellung einen Amboss einer Ultraschallschweißvorrichtung in einer isometrischen Darstellung,
- Fig. 4: in schematischer Darstellung fünf Ambosse mit unterschiedlicher Werkzeugkontur und
- Fig. 5: in schematischer Darstellung eine Draufsicht auf eine Werkzeugkontur eines Ambosses.

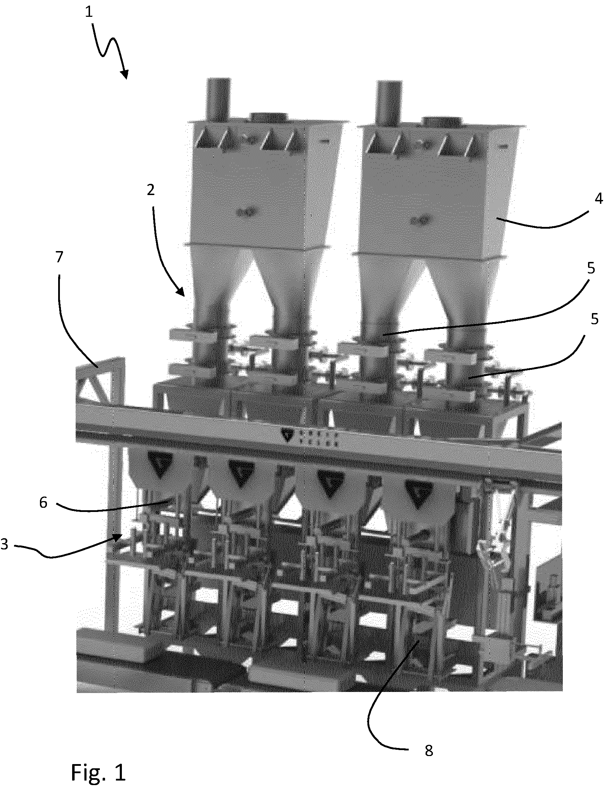

Fig. 1 zeigt eine Vorrichtung 1 zum Befüllen mehrerer flexibler Behältnisse, mit mehreren Befülleinrichtungen 2 und den jeweiligen Befülleinrichtungen 2 zugeordneten Verschließeinrichtungen 3. Der grundsätzliche Aufbau einer Anordnung aus Befülleinrichtung 2 und Verschließeinrichtung 3 entspricht dem einer Ventilsackabfüllvorrichtung des Standes der Technik, auf den insoweit verwiesen wird. Es wird in diesem Zusammenhang auf EP 3 581 500 A1 verwiesen sowie die zum Stand der Technik zählenden Luftpacker der Greif-Velox Maschinenfabrik GmbH in Lübeck Typ BVP 4.40 mit angebauter Ultraschall-Verschließeinheit Valvoseal.

Die Befülleinrichtungen 2 weisen mehrere Produktsilos 4 auf, in denen das abzugebende Füllgut gelagert wird. Über Produktleitungen 5 sind die Produktsilos mit Füllstutzen 6 gekoppelt, um das Füllgut bedarfsweise abzugeben. Die Befülleinrichtungen 2 und die Verschließeinrichtungen 6 sind an einem gemeinsamen Maschinengestell 7 angeordnet. Unterhalb der Füllstutzen 6 sind Aufnahmen 8 angeordnet, an denen die flexiblen Behältnisse gehalten werden, um sie zu befüllen und zu verschließen.

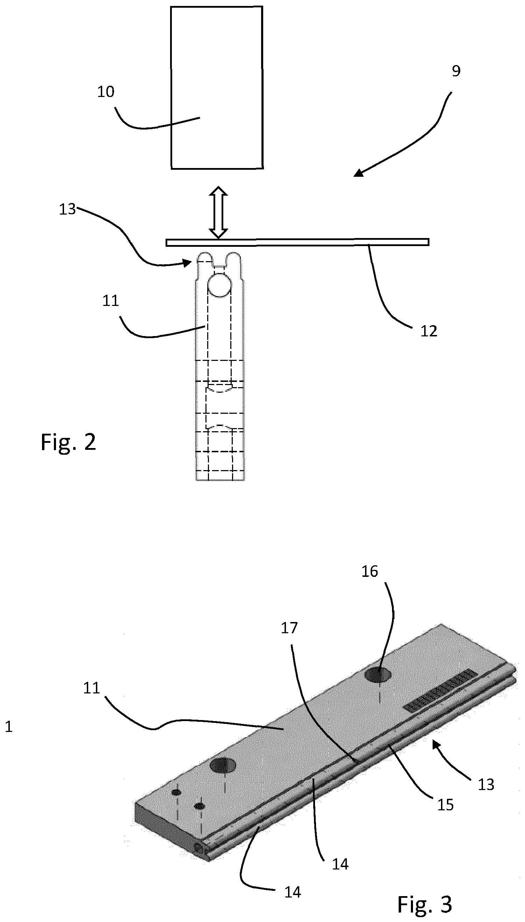

Die Verschließeinrichtungen 3 weisen jeweils eine Ultraschallschweißvorrichtung 9 auf, die in Fig. 2 schematisch dargestellt ist. Hier sind eine Sonotrode 10 und ein Amboss 11 angedeutet, die relativ zueinander bewegbar sind, um einen Abschnitt eines flexiblen Behältnisses 12 zwischen sich einzuschließen und verschweißen zu können. Von unten ist dabei der Amboss 11 als Stützfläche angeordnet und von oben wird die Sonotrode 10 zum Aufbringen von Schweißenergie angeordnet. Unter Einschluss des betreffenden und plattgedrückten Abschnitts des Behältnisses 12, etwa eines Ventilabschnitts eines Ventilsacks, wird damit eine Ultraschallschweißung durchgeführt, bei welcher das Behältnis 12 bzw. dessen Innenbeschichtung dicht verschweißt wird. Der Amboss 11 weist eine Werkzeugkontur 13 auf, die sich beim Verschweißen in das Material des Behältnisses 12 einarbeitet und hierdurch ein Schweißmuster hervorruft.

In Fig. 3 wird der Amboss 11 in einer dreidimensionalen Darstellung gezeigt. Die Werkzeugkontur 13 umfasst eine Basiskontur, die zwei parallel zueinander angeordnete Erhebungen 14 aufweist. Diese sind hier länglich und geradlinig ausgebildet und verlaufen entlang eines Randes des Ambosses 11. Zwischen den beiden Erhebungen 14 sind mehrere Luftdüsen 15 angeordnet, die mit Lufteinlässen 16 verbunden sind. Diese sind mit einer Quelle für Druckluft verbindbar und dazu vorgesehen, Verschmutzungen zwischen den Erhebungen 14 auszublasen, so dass ein zuverlässig dichtender Verschluss herstellbar ist. Wie in dieser Darstellung deutlich wird, ist eine der Erhebungen 14 von einer örtlichen Vertiefung 17 als Markierungsmerkmal durchsetzt. Durch das Markierungsmerkmal 17 weist das durch den betreffenden Amboss 11 hervorgerufene Schweißmuster eine individuelle Markierung auf. Diese ist eindeutig erkennbar und der Verschließeinrichtung 3 eindeutig zuordnen. Bei der Verwendung mehrerer Befülleinrichtungen 2 sowie mehrerer Verschlusseinrichtungen 3 kann bei Auffinden eines fehlerhaften Verschlusses daher unmittelbar die betreffende Verschlusseinrichtung 3 identifiziert werden.

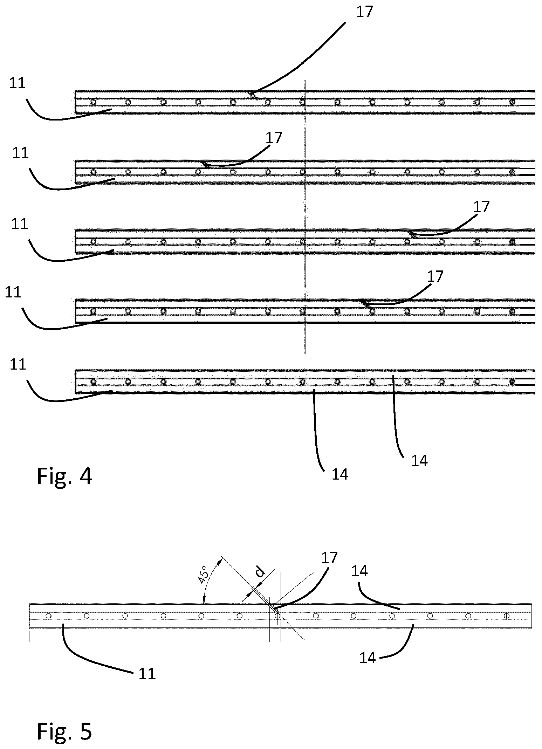

Beispielhaft werden in Fig. 4 fünf Ambosse 11 übereinander jeweils in einer Draufsicht gezeigt. Der unterste Amboss 11 ist ohne Markierung und weist lediglich eine Basiskontur mit zwei parallel zueinander angeordneten Erhebungen 14 auf. Die darüber platzierten Ambosse 11 weisen jeweils ein Markierungsmerkmal 17 auf, das jeweils an unterschiedlichen Positionen entlang einer Haupterstreckungsrichtung einer der Erhebungen 14 angeordnet ist. Diese vier Ambosse 11 könnten jeweils einer der vier Verschließeinrichtungen 3 zugeordnet werden. Die daraus resultierenden Schweißmuster weisen dadurch unterschiedliche Markierungen auf, durch die das betreffende verschlossene Behältnis der Verschließeinrichtung 3 zugeordnet werden kann, das die Verschweißung verursacht hat.

Wie in Fig. 5 dargestellt, kann das Markierungsmerkmal 17 als ein Schlitz ausgeführt sein, der beispielhaft in einem Winkel von 45° eine der beiden Erhebungen 14 durchläuft. Eine Breite d des Schlitzes könnte in einem Bereich liegen, der sich von 0,5 mm bis 3 mm erstreckt. Beispielsweise ist die Breite d=1 mm. Die Tiefe des Schlitzes kann sich in derselben Größenordnung bewegen und liegt hier bei etwa 2 mm. Der Einfluss des Markierungsmerkmals 17 auf das Schweißmuster ist damit zwar marginal, jedoch deutlich erkennbar.

### Bezugszeichenliste

- 1: Vorrichtung
- 2: Befülleinrichtung
- 3: Verschließeinrichtung
- 4: Produktsilo
- 5: Produktleitung
- 6: Füllstutzen
- 7: Maschinengestell
- 8: Aufnahme
- 9: Ultraschallschweißvorrichtung
- 10: Sonotrode
- 11: Amboss
- 12: Behältnis
- 13: Werkzeugkontur
- 14: Erhebung
- 15: Luftdüse
- 16: Lufteinlass
- 17: Markierungsmerkmal

## Patentansprüche

1. Vorrichtung (1) zum Befüllen flexibler Behältnisse (12), mit einem Maschinengestell (7), in dem mehrere Befülleinrichtungen (2) und mehrere den jeweiligen Befülleinrichtungen (2) zugeordnete Verschließeinrichtungen (3), mit denen befüllte Behältnisse (12) verschließbar sind, angeordnet sind, wobei die Verschließeinrichtungen (3) jeweils eine Ultraschallschweißvorrichtung (9) aufweisen, mit einem Amboss (11) zur Auflage eines Abschnitts des betreffenden Behältnisses (12), insbesondere eines Füllventils eines Ventilsacks, und mit einer Sonotrode (10), wobei der Amboss (11) und die Sonotrode (10) zueinander bewegbar angeordnet sind, **dadurch gekennzeichnet, dass** die Ambosse (11) der einzelnen Verschließeinrichtungen (3) unterschiedliche Werkzeugkonturen (13) aufweisen, sodass sie beim Ultraschallschweißen voneinander unterscheidbare Schweißmuster in den betreffenden Behältnissen (12) erzeugen.

2. Vorrichtung (1) nach Anspruch 1, **dadurch gekennzeichnet, dass** die Ambosse (11) jeweils eine identische Basiskontur aufweisen, wobei die Basiskontur mindestens eines der Ambosse (11) von mindestens einem für den betreffenden Amboss (11) individuellen Markierungsmerkmal (17) durchsetzt ist.

3. Vorrichtung (1) nach Anspruch 2, **dadurch gekennzeichnet, dass** die Basiskontur mindestens zwei parallel zueinander angeordnete Erhebungen (14) aufweist, wobei das Markierungsmerkmal (17) durch zumindest eine der Erhebungen (14) verläuft.

4. Vorrichtung (1) nach Anspruch 2 oder 3, **dadurch gekennzeichnet, dass** die Markierungsmerkmale (17) an unterschiedlichen Stellen der jeweiligen Basiskonturen angeordnet sind.

5. Vorrichtung (1) nach Anspruch 3 und 4, **dadurch gekennzeichnet, dass** die mindestens zwei parallel zueinander angeordneten Erhebungen (14) jeweils eine Haupterstreckungsrichtung aufweisen und die Markierungsmerkmale (17) an unterschiedlichen Positionen entlang dieser Haupterstreckungsrichtung der jeweiligen Basiskonturen angeordnet sind.

6. Vorrichtung (1) nach einem der Ansprüche 2 bis 5, **dadurch gekennzeichnet, dass** die Markierungsmerkmale (17) untereinander weitgehend identisch sind.

7. Vorrichtung (1) nach einem der vorhergehenden Ansprüche, **dadurch gekennzeichnet, dass** die Ambosse (11) jeweils einen ersten Werkzeugkonturabschnitt und einen zweiten Werkzeugkonturabschnitt aufweisen, wobei der erste Werkzeugkonturabschnitt dazu ausgebildet ist, einen dichtenden Verschluss des betreffenden Behältnisses (12) auszuformen, und wobei der zweite Werkzeugkonturabschnitt dazu ausgebildet ist, ein davon unabhängiges Erkennungsmuster auszuformen.

8. Vorrichtung (1) nach Anspruch 7, **dadurch gekennzeichnet, dass** der erste Werkzeugkonturabschnitt und der zweite Werkzeugkonturabschnitt voneinander beabstandet sind.

9. Vorrichtung (1) nach einem der vorhergehenden Ansprüche, **dadurch gekennzeichnet, dass** der Amboss (11) zum Reinigen der zu verschweißenden Stelle des Behältnisses (12) Luftdüsen (15) aufweist, die in der Werkzeugkontur (13) integriert sind oder daran angrenzen, wobei die Luftdüsen (15) mit einer Quelle für druckbeaufschlage Luft verbindbar sind.

10. Vorrichtung nach einem der vorhergehenden Ansprüche, **dadurch gekennzeichnet, dass** die Markierungsmerkmale (17) maschinenlesbar angeordnet und ausgebildet sind.

## Claims

1. A device (1) for filling flexible containers (12), with a machine frame (7), in which are arranged several filling devices (2) and several locking devices (3) that are allocated to the respective filling devices (2) and can be used to lock the filled containers (12), wherein the locking devices (3) each have an ultrasonic welding device (9), with an anvil (11) for supporting a section of the respective container (12), in particular a fill valve of a valve bag, and with a sonotrode (10), wherein the anvil (11) and the sonotrode (10) are movably arranged relative to each other, **characterized in that** the anvils (11) of the individual locking devices (3) have varying tool contours (13), so that they generate welding patterns that can be differentiated from each other in the respective containers (12) during ultrasonic welding.

2. The device (1) according to claim 1, **characterized in that** the anvils (11) each have an identical base contour, wherein the base contour of at least one of the anvils (11) is interspersed with at least one marking feature (17) individual to the respective anvil (11).

3. The device (1) according to claim 2, **characterized in that** the base contour has at least two elevations (14) arranged parallel to each other, wherein the marking feature (17) runs through at least one of the elevations (14).

4. The device (1) according to claim 2 or 3, **characterized in that** the marking features (17) are arranged at different locations of the respective base contours.

5. The device (1) according to claim 3 and 4, **characterized in that** the at least two elevations (14) arranged parallel to each other each have a main extension direction, and the marking features (17) are arranged at different positions along this main extension direction of the respective base contours.

6. The device (1) according to one of claims 2 to 5, **characterized in that** the marking features (17) are largely identical to each other.

7. The device (1) according to one of the preceding claims, **characterized in that** the anvils (11) each have a first tool contour section and a second tool contour section, wherein the first tool contour section is designed to form a tight seal of the respective container (12), and wherein the second tool contact section is designed to form a detection pattern independent of the latter.

8. The device (1) according to claim 7, **characterized in that** the first tool contour section and the second tool contour section are spaced apart from each other.

9. The device (1) according to one of the preceding claims, **characterized in that** the anvil (11) has air nozzles (15) for cleaning the site of the container (12) to be welded, which are integrated into the tool contour (13) or adjacent thereto, wherein the air nozzles (15) can be connected with a source for pressurized air.

10. The device according to one of the preceding claims, **characterized in that** the marking features (17) are machine readably arranged and designed.

## Revendications

1. Dispositif (1) destiné à remplir des contenants souples (12), avec un châssis de machine (7), dans lequel sont disposés plusieurs systèmes de remplissage (2) et plusieurs systèmes de fermeture (3) attribués aux systèmes de remplissage (2) respectifs, avec lesquels les contenants (12) remplis peuvent être fermés, sachant que les systèmes de fermeture (3) comportent respectivement un dispositif de soudure par ultrasons (9), avec une enclume (11) pour l'appui d'une section du contenant (12) concerné, en particulier d'une valve de remplissage d'un sac à valve et avec une sonotrode (10), sachant que l'enclume (11) et la sonotrode (10) sont disposés pouvant bouger l'un par rapport à l'autre, **caractérisé en ce que** les enclumes (11) des systèmes de fermeture (3) individuels comportent des profils d'outil différents (13) de telle manière qu'elles produisent lors de la soudure à ultrasons des types de soudure différenciables les uns des autres dans les contenants concernés (12).

2. Dispositif (1) selon la revendication 1, **caractérisé en ce que** les enclumes (11) comportent respectivement un profil de base identique, sachant que le profil de base d'au moins une des enclumes (11) est traversé par au moins une caractéristique de marquage (17) individuelle pour l'enclume (11) concernée.

3. Dispositif (1) selon la revendication 2, **caractérisé en ce que** le profil de base comporte au moins deux bossages (14) disposés parallèlement l'un par rapport à l'autre, sachant que la caractéristique de marquage (17) passe par au moins un des bossages (14).

4. Dispositif (1) selon la revendication 2 ou 3, **caractérisé en ce que** les caractéristiques de marquage (17) sont disposées à des emplacements différents des profils de base respectifs.

5. Dispositif (1) selon l'une quelconque des revendications 3 et 4, **caractérisé en ce qu'**au moins les deux bossages (14) disposés parallèlement l'un par rapport à l'autre comportent respectivement une direction d'extension principale et les caractéristiques de marquage (17) sont disposées à des positions différentes le long de cette direction d'extension principale des profils de base respectifs.

6. Dispositif (1) selon l'une quelconque des revendications 2 à 5, **caractérisé en ce que** les caractéristiques de marquage (17) sont largement identiques entre elles.

7. Dispositif (1) selon l'une quelconque des revendications précédentes, **caractérisé en ce que** les enclumes (11) comportent respectivement une première section de profil d'outil et une deuxième section de profil d'outil, sachant que la première section de profil d'outil est constituée pour conformer une fermeture étanche du contenant concerné (12) et sachant que la deuxième section de profil d'outil est constituée pour conformer un modèle d'identification indépendant de celle-ci.

8. Dispositif (1) selon la revendication 7, **caractérisé en ce que** la première section de profil d'outil et la deuxième section de profil d'outil sont à distance l'une de l'autre.

9. Dispositif (1) selon l'une quelconque des revendications précédentes, **caractérisé en ce que** l'enclume (11) pour nettoyer l'emplacement à souder du contenant (12) comporte des buses d'air (15), qui sont intégrées dans le profil d'outil (13) ou sont adjacentes à celui-ci, sachant que les buses d'air (15) peuvent être reliées à une source pour de l'air comprimé.

10. Dispositif selon l'une quelconque des revendications précédentes, **caractérisé en ce que** les caractéristiques de marquage (17) sont disposées et constituées lisibles par une machine.
